# EUROPÄISCHE PATENTANMELDUNG

(11) **EP 1 280 113 A2**
(43) Veröffentlichungstag der Anmeldung: **29.01.2003**
(21) Anmeldenummer: 02013211.4
(22) Anmeldetag: 15.06.2002
(51) Int. Cl.: G07F 7/10

(54) **Codeeingabeeinrichtung**

(30) Priorität: 24.07.2001 DE 10136021
(71) Anmelder: ROBERT BOSCH GMBH, 70442 Stuttgart (DE)
(72) Erfinder: Arndt, Kurt, 82239 Alling (DE)

(57) **Zusammenfassung**

Es wird eine Codeeingabeeinrichtung vorgeschlagen, die zum Schutz gegen Ausspähen eine Folie über der Tastatur aufweist, wobei die Folie eines Begrenzung des Sichtfelds auf die Tastatur erreicht. Die Folie kann dabei als holographische Folie, mit Fresnellinsen oder verspiegelt ausgebildet sein.

## Beschreibung

### Stand der Technik

Die Erfindung geht aus von einer Codeeingabeeinrichtung nach der Gattung des unabhängigen Patentanspruchs.

Es ist bereits bekannt, dass beispielsweise bei Geräten zur Eingabe der persönlichen Identifikationsnummer (PIN) für eine EC-Karte ein seitlicher Kragen angeordnet ist, so dass andere, beistehende Personen nicht erkennen können, welche PIN der betreffende Kunde für seine EC-Karte eingibt. Damit wird ein Ausspähschutz realisiert. Weiterhin ist bekannt, dass es verwürfelnde Tastaturen gibt, so dass zu verschiedenen Zeitpunkten eine Taste zur Eingabe von verschiedenen Buchstaben oder Zahlen dient.

### Vorteile der Erfindung

Die erfindungsgemäße Codeeingabeeinrichtung mit den Merkmalen des unabhängigen Patentanspruchs hat demgegenüber den Vorteil, dass ein wesentlich einfacheres Design, das kostengünstiger ist und einen höheren Ausspähschutz aufweist, möglich ist. Insbesondere bringt die Verwendung einer Folie mit sich, dass das Design freier gestaltbar ist und damit viel mehr Möglichkeiten bietet.

Durch die in den abhängigen Ansprüchen aufgeführten Maßnahmen und Weiterbildungen sind vorteilhafte Verbesserungen der im unabhängigen Patentanspruch angegebenen Codeeingabeeinrichtungen möglich.

Besonders vorteilhaft ist, dass die Folie als eine holographische Folie ausgebildet ist, die insbesondere das seitliche Lesen von einer Tastaturbeschriftung verhindert. Alternativ ist es möglich, eine Folie mit Fresnellinsen zu verwenden, die ebenfalls das seitliche Lesen verhindert. Eine weitere Möglichkeit das seitliche Lesen zu verhindern ist, eine verspiegelte Folie zu verwenden.

Um den Ausspähschutz weiter zu erhöhen, ist es vorteilhaftweise möglich, die Folie in Kombination mit einer verwürfelten Tastatur und/oder einem Kragen zu verwenden.

### Zeichnung

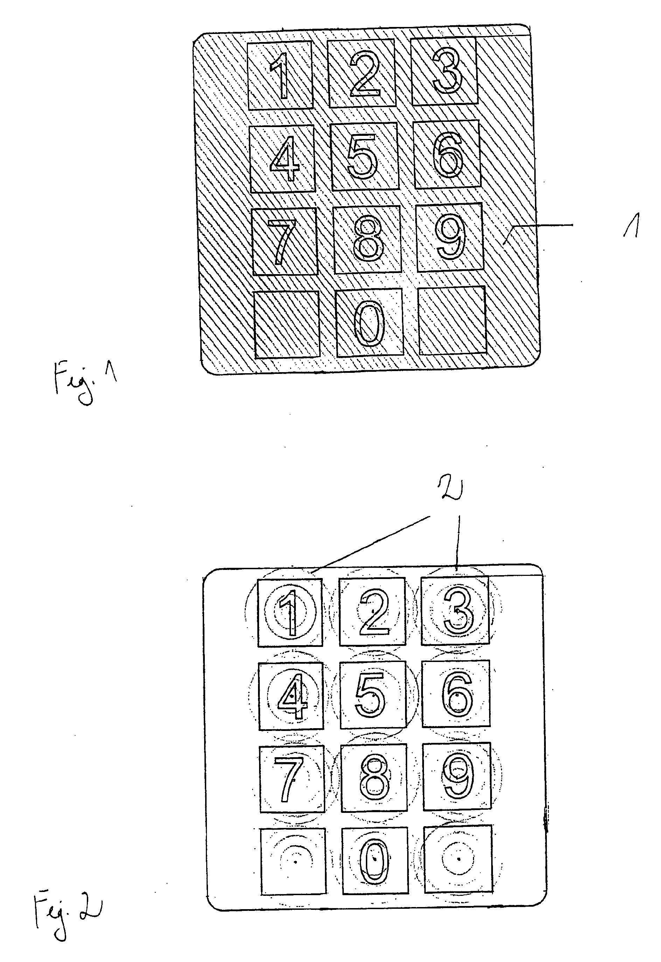

Ausführungsbeispiele der Erfindung sind in der Zeichnung dargestellt und werden in der nachfolgenden Beschreibung näher erläutert. Es zeigt Figur 1 eine erfindungsgemäße Codeeingabeeinrichtung mit einer holographischen Folie und Figur 2 eine erfindungsgemäße Codeeingabeeinrichtung mit einer Folie mit Fresnellinsen.

### Beschreibung

Codeeingabeeinrichtungen finden immer mehr Anwendung. Ein großes Anwendungsgebiet ist der bargeldlose Zahlungsverkehr, bei dem für Kreditkarten oder EC-Karten eine persönliche Identifikationsnummer einzugeben ist. Ein weiteres Anwendungsgebiet ist der Zugang zu gesicherten Gebäuden oder Räumen. Da die Codes, die die einzelnen Personen eingeben, meist personengebunden ist oder insgesamt, um dem Zweck der mehreren Personen zugänglichen Codeeingabeeinrichtungen zu dienen, nicht einfach von beistehenden Personen mitgelesen werden sollen, ist ein Ausspähschutz für diese Codeeingabeeinrichtungen erforderlich.

Erfindungsgemäß wird dieser Ausspähschutz durch eine Folie realisiert, die eine Begrenzung des Sichtfelds auf die Tastatur erreicht. Damit wird insbesondere ein seitliches Mitlesen verhindert. Die Folie kann dabei eine holographische Folie sein, mit Fresnellinsen aufgeprägt sein oder verspiegelt sein.

Figur 1 zeigt die erfindungsgemäße Codeeingabeeinrichtung in der Aufsicht mit einer holographischen Folie, die über einer Tastatur der Codeeingabeeinrichtung liegt. Die holographische Folie 1 ist durch eine schräge Schraffierung dargestellt. Die Tastenbeschriftung ist in ein Hologramm eingebettet und kann somit nur richtungsgebunden von einem Benutzer gelesen werden.

Figur 2 zeigt die erfindungsgemäße Codeeingabeeinrichtung mit einer Tastatur, wobei nun die Folie aufgeprägte Fresnellinsen aufweist. Die Fresnellinsen sind hier durch die konzentrischen Kreise über den einzelnen Tasten angegeben und mit dem Bezugszeichen 2 bezeichnet. Die Fresneloptik zerlegt die darunterliegende Tastenbeschriftung, so dass ein Ablesen der Tastenbeschriftung außerhalb der direkten Draufsicht nicht möglich ist.

Die verspiegelte Folie hat die gleiche Wirkung wie die Fresneloptik, die darunter liegende Zahl kann nur in direkter Draufsicht erkannt werden.

In Weiterbildungen ist es möglich, zusätzlich zur Folie eine sich in vorgegebenen zeitlichen Abständen verwürfelende Tastatur und/oder einen Kragen, um die Codeeingabeeinrichtung anzuordnen.

## Patentansprüche

1. Codeeingabeeinrichtung, wobei die Codeeingabeeinrichtung eine Tastatur und Mittel (1, 2) zum Schutz gegen Ausspähen aufweist, **dadurch gekennzeichnet, dass** die Mittel zum Schutz gegen Ausspähen als Folie (1, 2) über der Tastatur ausgebildet sind, wobei die Folie (1, 2) eine Begrenzung eines Sichtfelds auf die Tastatur erreicht.

2. Codeeingabeeinrichtung nach Anspruch 1, **dadurch gekennzeichnet, dass** die Folie als holographische Folie (1) ausgebildet ist.

3. Codeingabeeinrichtung nach Anspruch 1, **dadurch gekennzeichnet, dass** die Folie Fresnellinsen (2) aufweist.

4. Codeeingabeeinrichtung nach Anspruch 1, **dadurch gekennzeichnet, dass** die Folie verspiegelt ist.

5. Codeeingabeeinrichtung nach einem der vorhergehenden Ansprüche, **dadurch gekennzeichnet, dass** zusätzlich zur Folie eine verwürfelnde Tastatur und/oder ein Kragen als Schutz gegen Ausspähen einsetzbar sind.
